# EUROPÄISCHE PATENTANMELDUNG

(11) **EP 4 546 723 A1**
(43) Veröffentlichungstag der Anmeldung: **30.04.2025**
(21) Anmeldenummer: 23206421.2
(22) Anmeldetag: 27.10.2023
(51) Int. Cl.: H04L 12/66, H04L 12/28, H04L 47/80, H04W 40/02, H04W 76/10, H04W 88/16, H04L 45/302, H04W 40/22

(54) **VERFAHREN ZUM KOMMUNIZIEREN ZWISCHEN ZUMINDEST EINEM ENDGERÄT UND EINEM 5G-NETZWERK MITTELS EINES KOMMUNIKATIONSSYSTEMS, COMPUTERPROGRAMMPRODUKT, COMPUTERLESBARES SPEICHERMEDIUM SOWIE KOMMUNIKATIONSSYSTEM**

(71) Anmelder: Siemens Aktiengesellschaft, 80333 München (DE)
(72) Erfinder: Walewski, Joachim, 82008 Unterhaching (DE)
(74) Vertreter: Siemens Patent Attorneys

(57) **Zusammenfassung**

Die Erfindung betrifft ein Verfahren zum Kommunizieren zwischen zumindest einem Endgerät (12, 14, 16) und einem 5G-Netzwerk (18) mittels eines Kommunikationssystems (10), mit den Schritten: Erzeugen einer Kommunikationsverbindung (22) zwischen dem Endgerät (12, 14, 16) und einer elektronischen Recheneinrichtung (20) des Kommunikationssystems (10);
- Erzeugen einer weiteren Kommunikationsverbindung (24) zwischen der elektronischen Recheneinrichtung (20) und dem 5G-Netzwerk (18); Empfangen eines Datenpakets (26) von dem Endgerät (12, 14, 16) mittels der elektronischen Recheneinrichtung (20); und Steuern der Kommunikation zwischen dem Endgerät (12, 14, 16) und dem 5G-Netzwerk (18) mittels der elektronischen Recheneinrichtung (20), wobei das Steuern auf Basis einer Routenauswahlpolitik (28) für das Datenpaket (26) mittels der elektronischen Recheneinrichtung (20) durchgeführt wird, und wobei die Routenauswahlpolitik (28) eine Herkunft des Datenpakets (26) beim Steuern berücksichtigt. Ferner betrifft die Erfindung ein Computerprogrammprodukt, ein computerlesbares Speichermedium sowie ein Kommunikationssystem (10) .

## Beschreibung

Die Erfindung betrifft ein Verfahren zum Kommunizieren zwischen zumindest einem Endgerät und einem 5G-Netzwerk mittels eines Kommunikationssystems gemäß dem geltenden Patentanspruch 1. Ferner betrifft die Erfindung ein Computerprogrammprodukt, ein computerlesbares Speichermedium sowie ein Kommunikationssystem.

5G-Systeme bieten einen Mechanismus, der als User Equipment (UE) Route Selection Policy (URSP) bezeichnet wird. Dieser Mechanismus ermöglicht es 5G-Geräten, geeignete PDU- (Packet Data Unit) Sessions auf der Grundlage vordefinierter Kriterien auszuwählen. Dazu wird der Kommunikationsverkehr mit sogenannten Verkehrsdeskriptoren abgeglichen.

5G-Geräte sind meist Teil eines Geräts, zum Beispiel eines Smartphones oder eines Laptops, aber es gibt auch eine neue Rolle von den 5G-Geräten als sogenannte Gateways. Ein Beispiel eines solchen Gateways bietet Konnektivität zu Anwendungen, die auf Geräten in einem Kapillarnetz "hinter" dem Gerät selbst platziert sind. Es ist von Interesse, den von solchen Anwendungen stammenden Verkehr geeigneten PDU-Sessions zuzuweisen.

Bei der URSP wird der Verkehr nach der Ursprungsanwendung wie folgt unterschieden. Einer der Verkehrsdeskriptoren ist der Anwendungsdeskriptor, der aus einem Betriebssystem- und einer Anwendungsidentität ausgebildet ist. Es wird stillschweigend davon ausgegangen, dass die Anwendung und das Endgerät ein gemeinsames Betriebssystem haben, zum Beispiel Android.

Wenn eine Anwendung, die auf dem Betriebssystem des Endgeräts läuft, eine Verbindung über das Endgerät anstrebt, kann das Endgerät prüfen, ob die Betriebssystemkennung und die Anwendungskennung mit den Deskriptoren der gespeicherten URSP übereinstimmen. Ist dies der Fall, kann das Endgerät den Anwendungsverkehr entweder auf einer geeigneten bestehenden PDU-Sitzung abbilden, oder es kann eine neue PDU-Sitzung anfordern.

Aufgabe der vorliegenden Erfindung ist es, ein Verfahren, ein Computerprogrammprodukt, ein computerlesbares Speichermedium sowie ein Kommunikationssystem zu schaffen, mittels welchem verbessert eine Kommunikation zwischen zumindest einem Endgerät und einem 5G-Netzwerk durchgeführt werden kann.

Diese Aufgabe wird durch Verfahren, ein Computerprogrammprodukt, ein computerlesbares Speichermedium sowie ein Kommunikationssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Kommunizieren zwischen zumindest einem Endgerät und einem 5G-Netzwerk mittels eines Kommunikationssystems. Es wird eine Kommunikationsverbindung zwischen dem Endgerät und einer elektronischen Recheneinrichtung des Kommunikationssystems erzeugt. Es wird eine weitere Kommunikationsverbindung zwischen der elektronischen Recheneinrichtung und dem 5G-Netzwerk erzeugt. Es wird ein Datenpaket von dem Endgerät mittels der elektronischen Recheneinrichtung empfangen. Es erfolgt ein Steuern der Kommunikation zwischen dem Endgerät und dem 5G-Netzwerk mittels der elektronischen Recheneinrichtung, wobei das Steuern auf Basis einer Routenauswahlpolitik für das Datenpaket mittels der elektronischen Recheneinrichtung durchgeführt wird, und wobei die Routenauswahlpolitik eine Herkunft des Datenpakets beim Steuern berücksichtigt.

Insbesondere kann somit eine verbesserte Kommunikation zwischen dem zumindest einen Endgerät und dem 5G-Netzwerk realisiert werden. Insbesondere dient somit die elektronische Recheneinrichtung im Wesentlichen als sogenanntes Gateway.

Bei der Routenauswahlpolitik handelt es sich insbesondere um die sogenannte URSP (User Equipment Route Selection Policy). Bei der Routenauswahlpolitik handelt es sich um Regeln, die einem Gerät (User Equipment) innerhalb eines 5G-Netzes angeben, wie der Anwendungsverkehr über das Netz zu senden ist, zum Beispiel welche Datensitzung, welcher Slice, welcher Sitzungs- und Dienstkontinuitätsmodus oder dergleichen für eine bestimmte Anwendung zu verwenden ist. Wenn die Anwendung in dem Gerät, insbesondere das das sogenannte User Equipment enthält, startet, können die URSP-Regeln verwendet werden, um festzustellen, ob eine bestehende Sitzung verwendet werden kann oder eine neue Sitzung mit einem geeigneten Sitzungs- und Dienstkontinuitätsmodus erforderlich ist oder dergleichen.

Genauer gesagt wird der Nutzerdatenverkehr dieser Anwendung in der URSP-Regel durch einen sogenannten Verkehrsbeschreibungsparameter definiert, der zum Beispiel IP-Filterparameter oder die Anwendungsidentität enthalten kann. Insbesondere kann somit vorgesehen sein, dass beispielsweise das Endgerät und das Gateway, insbesondere als die elektronische Recheneinrichtung, kein gemeinsames Betriebssystem aufweisen. Somit ist das Kommunikationssystem gemäß dem Stand der Technik nicht anwendbar. Der Grund dafür ist, dass die Anwendung, von der der Verkehr ausgeht, auf Geräten gehostet wird, die, wie bereits erwähnt, kein gemeinsames Betriebssystem mit dem Endgerät haben.

Insbesondere ist es somit vorgesehen, dass der Anwendungsverkehr zusätzlich anhand seiner Herkunft unterschieden wird. Unter Herkunft ist vorliegend insbesondere nicht allein die Quelladresse zu verstehen, da sich die Adressen auch ändern können, zum Beispiel wenn der Transceiver eines Geräts im Kapillarnetz ausgetauscht wird. Außerdem kann es vorkommen, dass mehr als eine Anwendung, die einen bestimmten Datenverkehr benötigt, auf demselben Gerät im Kapillarnetz läuft. Daher ist insbesondere unter Herkunft zu verstehen, dass neben der reinen Quelladresse weitere Verkehrsdeskriptoren hinzugefügt werden. Bei diesen Verkehrsdeskriptoren kann es sich beispielsweise um einen MAC-Adressenbereich, um einen Einzelquellport-Typ oder auch um einen Quellporttypbereich handeln.

Insbesondere ermöglicht somit die vorliegende Erfindung eine feine Differenzierung nach Herkunftsanwendungen gegenüber dem Stand der Technik.

Gemäß einer vorteilhaften Ausgestaltungsform wird mittels der elektronischen Recheneinrichtung als Steuerung entschieden, mittels welcher Übertragungsart das Datenpaket an das 5G-Netzwerk übermittelt wird. Insbesondere kann unter Übertragungsart der Sitzungs- und Dienstleistungsmodus, die Netzwerk-Slice-Auswahlregel, die Regel der Auswahl des Datennetzwerknamens, das heißt an welches Datennetz der PDU-Session entsprechend PDU weitergeleitet werden sollen, angesehen werden. Ferner kann auch der PDU-Sitzungstyp, beispielsweise IP, Ethernet oder unstrukturiert ausgewählt werden. Ferner kann auch eine sog. Non-Seemless-Offload-Policy für das Endgerät ausgewählt werden, wobei dieses festlegt, dass der Verkehr nicht nahtlos auf einen Nicht-3GPP-Zugang außerhalb einer PDU-Sitzung verlagert werden soll. Ferner kann auch die bevorzugte Zugangsart, beispielsweise 3GPP- oder Nicht-3GPP-Zugang ausgewählt werden. Somit kann auf Basis der Herkunft bestimmt werden, auf welche Art und Weise wiederum das Datenpaket übermittelt wird. Insbesondere wird dann in Abhängigkeit von der Entscheidung auch das Datenpaket über die ausgewählte Übertragungsart entsprechend übermittelt.

Bei dem 5G-Netzwerk (fünfte Generation) handelt es sich um ein Mobilfunkstandard. Das 5G-Netzwerk ermöglicht insbesondere schnelle Datenraten, geringe Latenzzeiten, Echtzeitübertragung und mehr Gleichzeitigkeit im Netz. Das 5G-Netzwerk bietet beispielsweise Zell-Datenraten bis zu 20 Gbit/s an.

Es hat sich weiterhin als vorteilhaft erwiesen, wenn das zumindest eine Endgerät betriebssystemlos bereitgestellt wird. Mit anderen Worten kann es sich bei dem Endgerät um ein Endgerät handeln, welches kein Betriebssystem, beispielsweise kein Android oder sonstige Betriebssysteme aufweist. Mittels der Erfindung ist es nun möglich, dass auch betriebssystemlose Endgeräte zuverlässig mit einem 5G-Netzwerk kommunizieren können.

Weiterhin kann vorgesehen sein, dass das zumindest eine Endgerät und die elektronische Recheneinrichtung mit unterschiedlichen und/oder separaten Betriebssystemen bereitgestellt werden. Mit anderen Worten kann es sich bei dem Endgerät um ein Endgerät handeln, welches ein Betriebssystem aufweist, wobei die elektronische Recheneinrichtung ein anderes Betriebssystem aufweist. Insbesondere sind somit zumindest separate Betriebssystem vorgesehen. Mittels der Erfindung ist es nun möglich, dass auch Endgeräte mit unterschiedlichen Betriebssystemen zur elektronischen Recheneinrichtung zuverlässig mit einem 5G-Netzwerk kommunizieren können.

Weiterhin vorteilhaft ist, wenn eine Kommunikation zwischen einer Vielzahl von Endgeräten und der elektronischen Recheneinrichtung erzeugt wird. Insbesondere kann somit die elektronische Recheneinrichtung als Gateway für eine Vielzahl von Endgeräten angesehen werden und agieren. Die elektronische Recheneinrichtung steuert dann wiederum die Kommunikation der Vielzahl von Endgeräten mit dem 5G-Netzwerk. Somit kann eine verbesserte Kommunikation für eine Vielzahl von Endgeräten mit dem 5G-Netzwerk realisiert werden.

Weiterhin vorteilhaft ist, wenn als das 5G-Netzwerk eine ethernetbasierte Kommunikation bereitgestellt wird. Bei dem Ethernet handelt es sich insbesondere um sogenannte lokale Datennetze (LANs), welche beispielsweise in lokalen Einrichtungen, beispielsweise Fabriken oder dergleichen, ausgebildet sein können. Somit ist es ermöglicht, dass ein 5G-Netzwerk für Ethernet bereitgestellt wird, wobei die entsprechende Herkunft des Datenpakets nun zusätzlich mitbetrachtet werden kann, um eine verbesserte Kommunikation innerhalb des Ethernets bereitzustellen.

Es hat sich weiterhin als vorteilhaft erwiesen, wenn zum Erkennen der Herkunft ein MAC-Adressenbereich innerhalb der Routenauswahlpolitik vorgegeben wird. Insbesondere kann somit auf Basis des MAC-Adressenbereichs die Herkunft des Datenpakets zuverlässig einem Endgerät zugewiesen werden. Bei dem Adressenbereich handelt es sich insbesondere um einen Bereich, welcher einen vorgegebenen Endpunkt für eine MAC-Adresse und einen vorgegebenen Anfangspunkt für eine MAC-Adresse aufweist. Innerhalb dieses Adressenbereichs können nun zuverlässig die Herkunft und somit das Endgerät identifiziert werden.

Es hat sich weiterhin als vorteilhaft erwiesen, wenn zusätzlich eine Kennung einer Verbindungsgruppe einer Vielzahl von Endgeräten in der Routenauswahlpolitik hinterlegt ist. Dabei handelt es sich um die Kennung für ein oder mehrere Endgeräte hinter einem sogenannten Wohnungsgateway.

Eine weitere vorteilhafte Ausgestaltungsform sieht vor, dass als das 5G-Netzwerk eine Internetprotokoll-basierte Kommunikation bereitgestellt wird. Insbesondere kann somit ein Netzwerk bereitgestellt werden, welches Zugang zum Internet hat und somit nicht lokal begrenzt ist. Somit kann eine schnelle Kommunikation mit dem Internet realisiert werden.

Ferner hat es sich als vorteilhaft erwiesen, wenn zum Erkennen der Herkunft ein Einzelquellporttyp vorgegeben wird. Auf Basis des Einzelquellporttyps können zuverlässig die Herkunft und somit das Endgerät identifiziert werden. Somit kann zuverlässig eine Kommunikation zwischen dem Endgerät und dem 5G-Netzwerk realisiert werden.

Es hat sich weiterhin als vorteilhaft erwiesen, wenn zum Erkennen der Herkunft ein Quellporttypbereich vorgegeben wird. Somit kann ein Quellporttypbereich vorgegeben werden, innerhalb welchem wiederum sich der Quellport des Endgeräts befinden soll. Sollte beispielsweise dann festgestellt werden, dass der Port des Endgeräts innerhalb dieses Bereichs aufzufinden ist, kann dieses zuverlässig erkannt werden und eine entsprechende Kommunikation bereitgestellt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit zumindest einem Computerprogrammprodukt nach dem vorhergehenden Aspekt.

Ein nochmals weiterer Aspekt der Erfindung betrifft ein Kommunikationssystem zum Kommunizieren zwischen zumindest einem Endgerät und einem 5G-Netzwerk, mit zumindest einer elektronischen Recheneinrichtung, wobei das Kommunikationssystem zum Durchführen eines Verfahrens nach dem vorhergehenden Aspekt ausgebildet ist. Insbesondere wird das Verfahren mittels des Kommunikationssystems durchgeführt.

Vorteilhafte Ausgestaltungsformen des Verfahrens sind als vorteilhafte Ausgestaltungsformen des Computerprogrammprodukts, des computerlesbares Speichermediums sowie des Kommunikationssystems anzusehen. Das Kommunikationssystem weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigt:
- FIG: ein schematisch Blockschaltbild gemäß einer Ausführungsform eines Kommunikationssystems.

In der Figur sind gleiche oder funktionsgleiche Elemente mit den gleichen Bezugszeichen versehen.

Die FIG zeigt ein schematisches Blockschaltbild gemäß einer Ausführungsform eines Kommunikationssystems 10. Das Kommunikationssystem 10 ist zum Kommunizieren zwischen zumindest einem Endgerät 12, 14, 16 und einem 5G-Netzwerk 18 ausgebildet. Hierzu weist das Kommunikationssystem 10 zumindest eine elektronische Recheneinrichtung 20 auf, welche auch als sogenanntes Gateway bezeichnet werden kann.

Vorliegend sind insbesondere ein erstes Endgerät 12, ein zweites Endgerät 14 sowie ein drittes Endgerät 16 gezeigt.

Vorliegend zeigt die FIG insbesondere ein Verfahren zum Kommunizieren zwischen zumindest einem Endgerät 12, 14, 16 und dem 5G-Netzwerk 18 mittels des Kommunikationssystems 10. Es wird eine Kommunikationsverbindung 22 zwischen dem Endgerät 12, 14, 16 und der elektronischen Recheneinrichtung 20 erzeugt. Es erfolgt das Erzeugen einer weiteren Kommunikationsverbindung 24 zwischen der elektronischen Recheneinrichtung 20 und dem 5G-Netzwerk 18. Es wird ein Datenpaket 26 von dem Endgerät 12, 14, 16 mittels der elektronischen Recheneinrichtung 26 empfangen. Insbesondere erfolgt das Senden des Datenpakets 26 somit über die Kommunikationsverbindung 22.

Insbesondere ist vorliegend insbesondere über die Vielzahl von Kommunikationsverbindungen 22 ein Kapillarnetz dargestellt.

Es erfolgt dann das Steuern der Kommunikation zwischen dem Endgerät 12, 14, 16 und dem 5G-Netzwerk 18 mittels der elektronischen Recheneinrichtung 20, wobei das Steuern auf Basis einer Routenauswahlpolitik 28 für das Datenpaket 26 mittels der elektronischen Recheneinrichtung 20 durchgeführt wird und wobei die Routenauswahlpolitik 28 eine Herkunft des Datenpakets 26 beim Steuern berücksichtigt.

Insbesondere kann dabei vorgesehen sein, dass mittels der elektronischen Recheneinrichtung 20 als Steuerung entschieden wird, mittels welcher Übertragungsart das Datenpaket 26 an das 5G-Netzwerk 18 übermittelt wird.

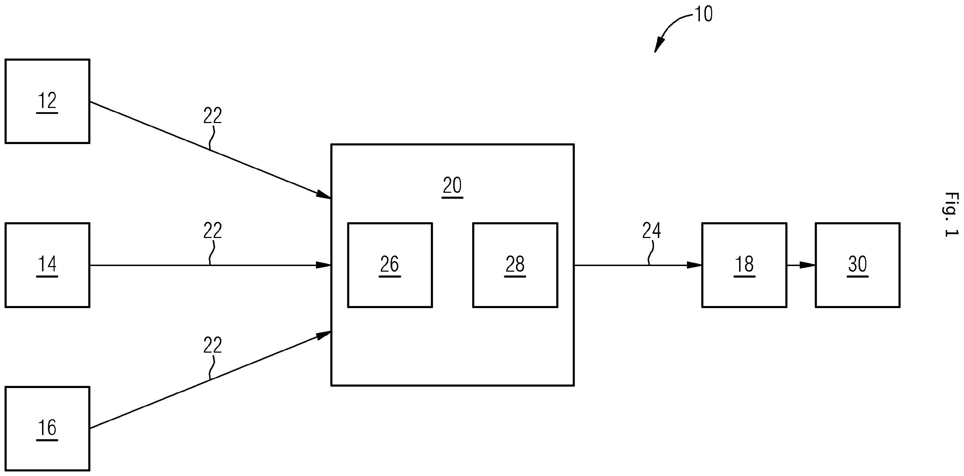

Ferner ist insbesondere gezeigt, dass das zumindest ein Endgerät 12, 14, 16 betriebssystemlos bereitgestellt wird. Des Weiteren zeigt die FIG 1, wie bereits erwähnt, dass eine Kommunikation zwischen einer Vielzahl von Endgeräten 12, 14, 16 und der elektronischen Recheneinrichtung 20 erzeugt wird.

Das 5G-Netzwerk 18 kann dabei als ethernetbasierte Kommunikation bereitgestellt werden. Hierzu kann beispielsweise vorgesehen sein, dass zum Erkennen der Herkunft eine MAC-Adressenbereich innerhalb der Routenauswahlpolitik 28 vorgegeben wird. Ferner kann zusätzlich eine Kennung einer Verbindungsgruppe einer Vielzahl von Endgeräten 12, 14, 16 in der Routenauswahlpolitik 28 hinterlegt sein.

Alternativ kann das 5G-Netzwerk 18 eine Internetprotokoll-basierte Kommunikation bereitstellen. Hierbei kann beispielsweise zum Erkennen der Herkunft ein Einzelquellporttyp vorgegeben werden. Ferner kann zum Erkennen der Herkunft ein Quellporttypbereich vorgegeben werden.

Das 5-G-Netzwerk 18 kann, wie in der FIG dargestellt, wiederum mit einem Datennetzwerk 30 gekoppelt sein. Das Datennetzwerk 30 kann wiederum kabelgebunden ausgebildet sein.

Insbesondere beschreibt somit die FIG 1 eine Möglichkeit, auch bei betriebssystemlosen Endgeräten 12, 14, 16 und der elektronischen Recheneinrichtung 20 als Gateway eine Kommunikation zwischen den Endgeräten 12, 14, 16 und dem 5G-Netzwerk 18 durchführen zu können. Insbesondere ist somit vorgesehen, dass eine Quelladresse genutzt wird. Zusätzlich wird nun ferner auch eine Herkunft mitgenutzt, da die Unterscheidung rein nach der Quelladresse jedoch oftmals nicht ausreichend ist. Diese Adressen ändern sich zum Beispiel, wenn der Transceiver eines Endgeräts 12, 14, 16 innerhalb des Kapillarnetzwerks ausgetauscht wird.

Außerdem kann es vorkommen, dass mehr als eine Anwendung, die einen bestimmten Datenverkehr benötigt, auf demselben Gerät im Kapillarnetz läuft. Daher ist vorgesehen, dass die Quelladresse selbst noch um die Verkehrsdeskriptoren erweitert wird, insbesondere im sogenannten IP-Verkehr, um den Typ des einzelnen Quellports beziehungsweise und den Typ des Quellportbereichs und bei einem Ethernet insbesondere um den Typ des MAC-Quelladressenbereichs. Zusätzlich ist vorgeschlagen, dass eine Verbindungsgruppen-Identität auf den Ethernet-Verkehr ausgeweitet wird.

## Patentansprüche

1. Verfahren zum Kommunizieren zwischen zumindest einem Endgerät (12, 14, 16) und einem 5G-Netzwerk (18) mittels eines Kommunikationssystems (10), mit den Schritten:
- Erzeugen einer Kommunikationsverbindung (22) zwischen dem Endgerät (12, 14, 16) und einer elektronischen Recheneinrichtung (20) des Kommunikationssystems (10);
- Erzeugen einer weiteren Kommunikationsverbindung (24) zwischen der elektronischen Recheneinrichtung (20) und dem 5G-Netzwerk (18);
- Empfangen eines Datenpakets (26) von dem Endgerät (12, 14, 16) mittels der elektronischen Recheneinrichtung (20); und
- Steuern der Kommunikation zwischen dem Endgerät (12, 14, 16) und dem 5G-Netzwerk (18) mittels der elektronischen Recheneinrichtung (20), wobei das Steuern auf Basis einer Routenauswahlpolitik (28) für das Datenpaket (26) mittels der elektronischen Recheneinrichtung (20) durchgeführt wird, und wobei die Routenauswahlpolitik (28) eine Herkunft des Datenpakets (26) beim Steuern berücksichtigt.

2. Verfahren nach Anspruch 1, **dadurch gekennzeichnet, dass** mittels der elektronischen Recheneinrichtung (20) als Steuerung entschieden wird, mittels welcher Übertragungsart das Datenpaket (26) an das 5G-Netzwerk (18) übermittelt wird.

3. Verfahren nach Anspruch 1 oder 2, **dadurch gekennzeichnet, dass** das zumindest eine Endgerät (12, 14, 16) betriebssystemlos bereitgestellt wird.

4. Verfahren nach einem der vorhergehenden Ansprüche, **dadurch gekennzeichnet, dass** das zumindest eine Endgerät (12, 14, 16) und die elektronische Recheneinrichtung (20) mit einem unterschiedlichen und/oder separaten Betriebssystemen bereitgestellt wird.

5. Verfahren nach einem der vorhergehenden Ansprüche, **dadurch gekennzeichnet, dass** eine Kommunikation zwischen einer Vielzahl von Endgeräten (12, 14, 16) und der elektronischen Recheneinrichtung (20) erzeugt wird.

6. Verfahren nach einem der vorhergehenden Ansprüche, **dadurch gekennzeichnet, dass** als das 5G-Netzwerk (18) eine ethernetbasierte Kommunikation bereitgestellt wird.

7. Verfahren nach Anspruch 6, **dadurch gekennzeichnet, dass** zum Erkennen der Herkunft eine MAC-Adressenbereich innerhalb der Routenauswahlpolitik (28) vorgegeben wird.

8. Verfahren nach Anspruch 6 oder 7, **dadurch gekennzeichnet, dass** zusätzlich eine Kennung einer Verbindungsgruppe einer Vielzahl von Endgeräten (12, 14, 16) in der Routenauswahlpolitik (28) hinterlegt ist.

9. Verfahren nach einem der vorhergehenden Ansprüche, **dadurch gekennzeichnet, dass** als das 5G-Netzwerk (18) eine Internetprotokoll-basierte Kommunikation bereitgestellt wird.

10. Verfahren nach Anspruch 9, **dadurch gekennzeichnet, dass** zum Erkennen der Herkunft ein Einzelquellporttyp vorgegeben wird.

11. Verfahren nach Anspruch 9 oder 10, **dadurch gekennzeichnet, dass** zum Erkennen der Herkunft ein Quellporttypbereich vorgegeben wird.

12. Computerprogrammprodukt mit Programmcodemitteln, welche eine elektronische Recheneinrichtung (20) dazu veranlassen, wenn die Programmcodemittel von der elektronischen Recheneinrichtung (20) abgearbeitet werden, ein Verfahren nach einem der Ansprüche 1 bis 11 durchzuführen.

13. Computerlesbares Speichermedium mit zumindest einem Computerprogrammprodukt nach Anspruch 12.

14. Kommunikationssystem (10) zum Kommunizieren zwischen zumindest einem Endgerät (12, 14, 16) und einem 5G-Netzwerk (18), mit zumindest einer elektronischen Recheneinrichtung (20), wobei das Kommunikationssystem (10) zum Durchführen eines Verfahrens nach einem der Ansprüche 1 bis 11 ausgebildet ist.
